# EUROPEAN PATENT APPLICATION

(11) **EP 1 977 955 A1**
(43) Date of publication of application: **08.10.2008**
(21) Application number: 08102987.8
(22) Date of filing: 27.03.2008
(51) Int. Cl.: B62D 7/16, B62D 7/18, B62D 17/00

(54) **Steering axle**

(30) Priority: 02.04.2007 US 695237
(71) Applicant: Deere & Company, Moline, IL 61265-8098 (US)
(72) Inventor: Crouse, Stephen K, Waterloo, IA 50702 (US)
(74) Representative: Holst, Sönke

(57) **Abstract**

A steering axle (10) comprising an improved ball joint (16) and tie rod (36). The ball joint (16) comprising a spherical ball (18), a stud end (22), and the spherical ball (18) having a center (24). The stud end (22) has a longitudinal rotational axis (26), wherein the center (24) of the spherical ball (18) is disposed away from the longitudinal rotational axis (26). In addition, the ball joint (16) comprising the spherical ball (18) and the stud end (22) is coupled to a steering knuckle (12) and wherein the unitary, non-adjustable tie rod (36) is coupled to the ball joint (16).

## Description

A steering axle for a work vehicle, comprising an elongate axle housing having first and second ends coupled to at least a first steering knuckle; a wheel hub rotationally coupled to the at least one steering knuckle; a tie rod coupled to a ball joint assembly wherein the ball joint assembly is coupled to the at least first steering knuckle on the end of the axle housing and further wherein the tie rod is unitary, non-adjustable and has an end with a spherical opening to secure a spherical ball coupled to the ball joint assembly and a top and a bottom surface; wherein the ball joint assembly has an upper and a lower end for securing a ball stud cap.

Agricultural vehicles typically include a fixed axle by which a primary driving power is transferred through fixed wheels rotatably mounted on opposing ends of the axle. To support the chassis of the agricultural vehicle above the ground, a steering axle having pivotally mounted steerable ground engaging wheels is rotatably mounted on the opposing ends thereof to support the chassis of the agricultural vehicle above the ground.

As agricultural vehicles move forward, it is desirable that the front of the tires points towards the centerline of the vehicle, with both tires aiming inboard. This arrangement, which is known as toe-in, is defined as the angular relationship of the principal plane of the front wheel to the vertical plane passing through the longitudinal axis of the vehicle. As viewed from overhead, toe-in dictates whether or not the tires roll straight down the road. We can refer to toe-in as the angle of attack for the tires as the vehicle is driven forward and a slight amount of toe-in is normally desirable for good handling of tire wear characteristics. For agricultural vehicles to obtain this type of configuration it usually requires the adjustment of the steering toe angles. This adjustment process usually involves manually shortening or lengthening a toe-link bar or tie rod to achieve sufficient inward or outward toe movement. For many years, this adjustment process has been used primarily to enable initial alignment or subsequent realignment of the wheels. In general, the practice has been to fabricate the tie rod into two separate pieces or one solid piece with both having threaded ends formed, which are surroundingly engaged by a split sleeve or tubular member correspondingly threaded, which when rotated in opposite directions or one direction causes elongation or shortening of the tie rod. One known type of adjustable tie rod assembly has ball joints at each end and a dual nut arrangement for adjustment. This dual nut arrangement comprises a tie rod that has oppositely threaded ends. Each threaded end is screwed into an internally threaded end of a ball joint housing. The tie rod also carries a nut at each end that is tightened against the adjacent housing to maintain the depth of the threaded end in the housing. The length of the tie rod assembly is adjusted while connected in the steering linkage system by loosening the two nuts and turning the tie rod with respect to the two ball joint housings at the respective ends of the tie rod. The two nuts are then tightened down after the adjustment is made to maintain the adjustment. This type of design configuration, which is well known in the prior art includes space constraints that make it difficult to have a conventional right hand/left hand toe-in/out adjustment. The ball ends of the axle are threaded into a formed tie rod. Usually, if the rotating section of the tie rod is non-axial for clearance needs, it can only be oriented at one rotation location.

In view of the above one object of the invention is to provide a steering axle with an improved ball joint assembly.

According to the invention a steering axle of the above mentioned type is characterized in that the spherical ball is coupled to oppositely attached first and second stud ends, wherein the spherical ball has a center and the first and second stud ends have a longitudinal rotational axis, and further wherein the center is disposed away from the longitudinal rotational axis of the stud ends, and the spherical ball is secured within the spherical opening on the tie rod end. Accordingly the operator of the agricultural vehicle is able to adjust the toe-in/out without removing and disassembling the tie rod.

Furthermore an improved tie rod assembly clearance to the wheels is provided by having a unitary, nonadjustable tie rod.

Additionally an improved method for adjusting the tie rod is provided wherein different thread assemblies are eliminated by having the same hand threads on both ball joint assemblies, thus reducing service part proliferation.

According to the present invention, the foregoing and other objects and advantages are attained by at least one steering wheel axle system on a work vehicle with an improved ball joint and tie rod design.

Several embodiments of the invention are described in greater detail in the following drawings.
Fig. 1 shows a side elevational view of a first embodiment of a steering axle with a ball joint assembly, and a tie rod coupled to the spherical ball end of the ball joint assembly;
Fig. 2 shows an exploded perspective view of the ball joint assembly of Fig. 1 whereby the ball joint assembly is coupled to the steering axle;
Fig. 3 shows a sectional view of the spherical ball end of Fig. 2 whereby a first and second stud end is coupled thereto;
Fig. 4 shows a sectional view of the center of the spherical ball end of Fig. 3 whereby the center is disposed away from the longitudinal rotational axis of the spherical ball;
Fig. 5 shows a cut out view of the ball stud end of Fig. 3, whereby the ball stud end is seated within the spherical opening on the outer end of tie rod;
Fig. 6 is sectional view of at least one end of the ball joint assembly of Fig. 2 whereby the ball joint assembly is coupled to the steering knuckle.

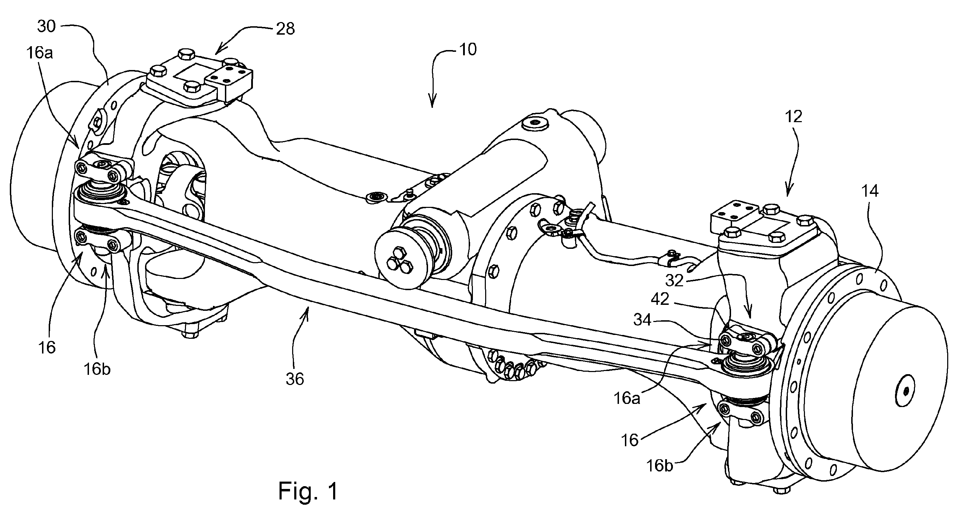

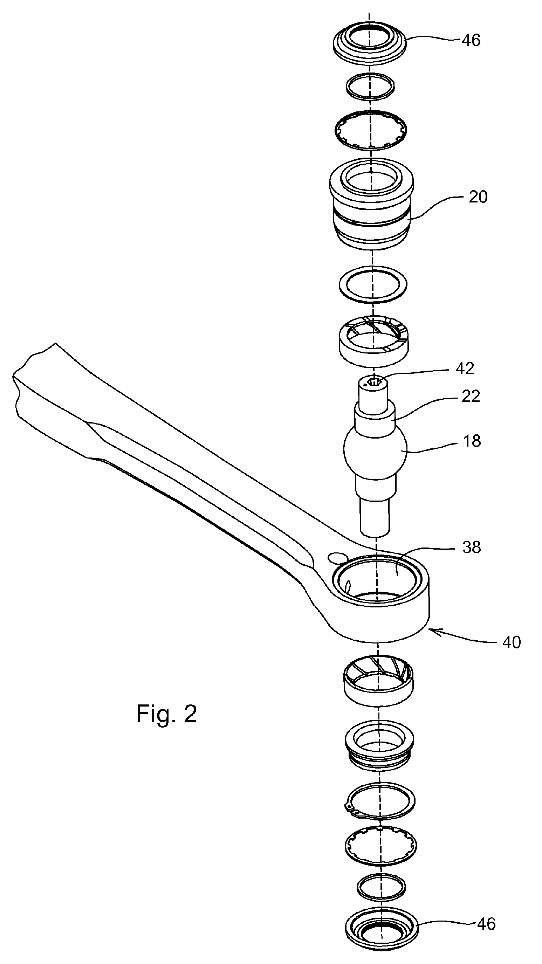

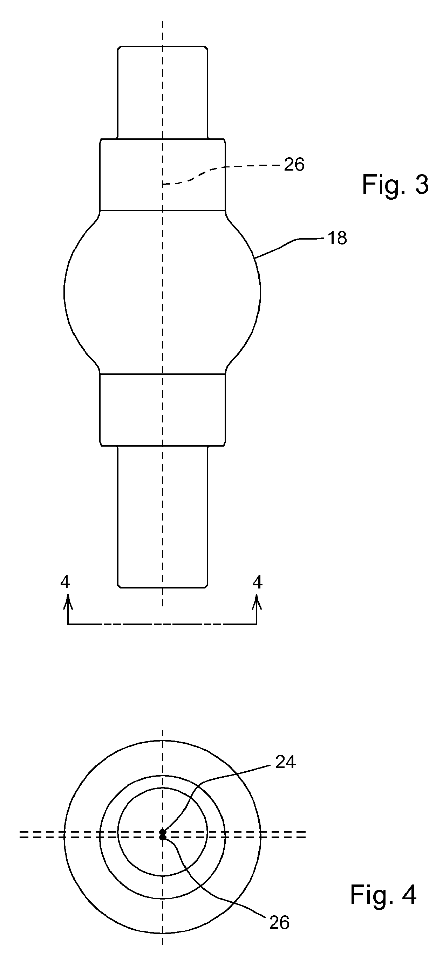

In general, the present invention is directed toward a steering axle 10 comprising an improved ball joint and tie rod for accommodating a relative agricultural vehicle. As embodied herein, and with reference to Fig. 1 and Fig. 2, a first steering knuckle 12 is coupled to the end of the first axle housing 14 and includes a first ball joint assembly 16 comprising a ball joint socket 20, wherein a first spherical ball 18 is contained within the ball joint socket 20 and ball stud mount 22, also known as the oppositely attached first and second stud ends 22, (first and second stud ends are identical) are coupled thereto. With reference to Fig. 3 and Fig. 4, the first spherical ball 18 has a center 24 and the oppositely attached first and second stud ends 22 attached to the spherical ball 18 have a longitudinal rotational axis 26, wherein the spherical ball center 24 is disposed away from the longitudinal rotational axis 26.

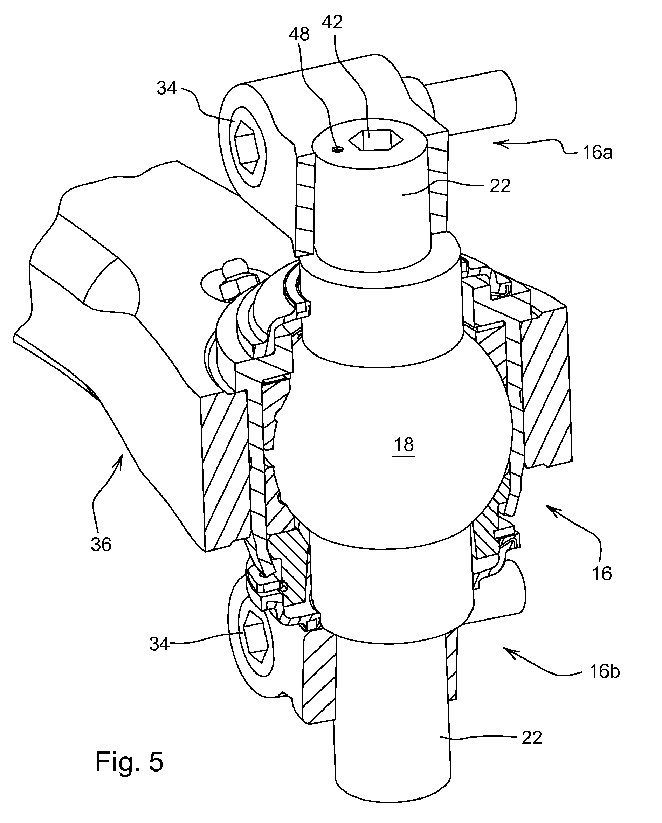

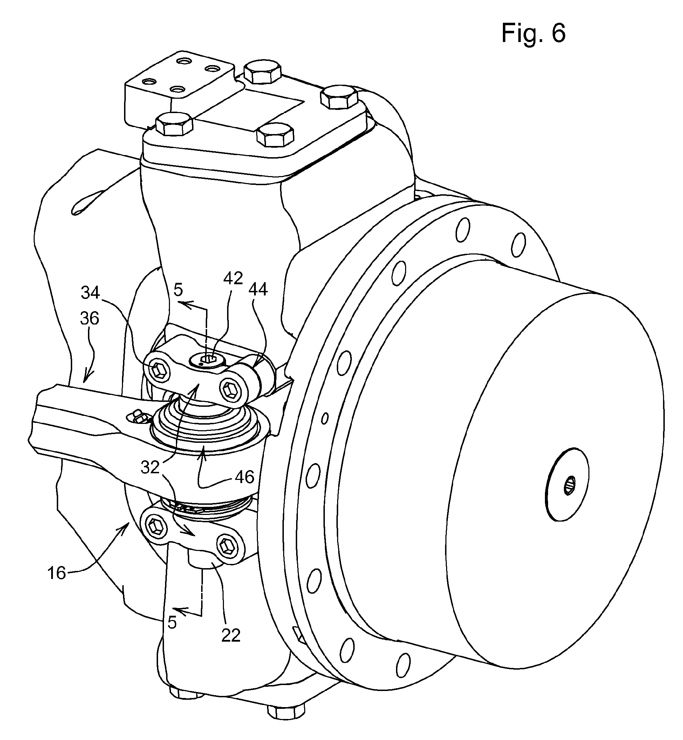

As further embodied, and with reference to Fig. 1 and Fig. 2, a second steering knuckle 28 is coupled to the opposite end of the axle housing 30 and includes a second ball joint assembly 16, which is generally identical to the first, comprising a socket 20 with a second spherical ball 18 held in a socket 20 and oppositely attached first and second stud ends 22 coupled thereto. With reference to Fig. 3 and Fig.4, the second spherical ball 18 has a center and the oppositely attached first and second stud ends 22 attached to the spherical ball 18 have a longitudinal rotational axis 26, wherein the center is disposed away from the longitudinal axis 24. Fig. 5 illustrates the first and second stud ends 22, eccentrically attached to the spherical ball 18, wherein the first and second stud ends 22 are oppositely attached to the spherical ball 18. The first and second stud ends 22 are then contained by two ball stud caps 32 securely fastened on both the upper 16a and lower ends 16b of the ball joint assembly 16 by fasteners 34, Fig. 6. The ball stud caps 32 have slots 44, as shown in Fig. 6, extending through the cross bore to the bore. When the fastener 34 is threaded through the bore, the slot 44 is closed whereby the caps 32 clamp upon the first and second stud ends 22 to grip the first and second stud ends 22 and then prevent rotation of the first and second stud ends 22, Fig. 6. In addition, Fig. 2 and Fig. 6 provide ball dust boots 46 wherein the ball dust boots 46 are seated on the top and bottom surfaces of the spherical opening 38 located on the tie rod end 40 as a seal to prevent damage and exposure to the spherical ball.

Linking the two ball joint assemblies 16 together is a unitary, non-adjustable tie rod 36. The tie rod 36 includes spherical openings 38 on each of its outer ends 40 to journal the spherical ball 18 in a conventional manner, Fig. 6. This unitary, non-adjustable feature of the tie rod 36 allows for greater clearance at the wheels. The tie rod 36 as described herein thus eliminates the short left hand/right hand assembly adjustment by providing a unitary, non-adjustable tie rod 36 with an eccentric ball stud mount that extends or shortens the tie rod.

To adjust the toe in/toe out to change the angular position of the wheel assembly, the wheel toe is adjusted by adjusting the length of the associated tie rod 36. This type of configuration enables the operator to adjust the length by a rotating means wherein this means for rotating may be but is not limited to a screw cap or a protrusion 42 located on the top end or the bottom end of the ball stud mount 22. Specifically, the oppositely attached first and second stud ends 22, which are offset in relation to the spherical ball 18 (i.e. eccentric mounting rounds when compared to the center line of the spherical ball) are rotated in and out, wherein the tie rod length 36 is changed with respect to the rotation of the ball stud mount 22, until the operator obtains the desired adjusted tie rod length 36. By rotating eccentrically the ball stud mount, the tie rod distance between the two ball stud mounts is changed. In addition, Fig. 4 shows an indicator mark 48 located at the top end 22 of the ball stud mount, wherein the indicator mark acts as an indication of the rotation angle of the ball stud mount.

While the foregoing invention has been shown and described with reference to a preferred embodiment, it will be understood by those possessing skill in the art that various changes and modifications may be made without departing from the spirit and scope of the invention.

## Claims

1. A steering axle (10) for a work vehicle, comprising an elongate axle housing having first and second ends (14, 30); at least a first steering knuckle (12) coupled to one end (14, 30) of the elongate axle housing; a wheel hub rotationally coupled to the at least one steering knuckle (12); a tie rod (36) coupled to a ball joint assembly (16) wherein the ball joint assembly (16) is coupled to the at least first steering knuckle (12) on the end (14, 30) of the axle housing and further wherein the tie rod (36) is unitary, non-adjustable and has an end with a spherical opening (38) to secure a spherical ball (18) coupled to the ball joint assembly (16) and a top and a bottom surface; wherein the ball joint assembly (16) has an upper and a lower end (16a, 16b) for securing a ball stud cap (32), **characterized in that** the spherical ball (18) is coupled to oppositely attached first and second stud ends (22); wherein the spherical ball (18) has a center (24) and the first and second stud ends (22) have a longitudinal rotational axis (26), and further wherein the center (24) is disposed away from the longitudinal rotational axis (26) of the stud ends (22), and the spherical ball (18) is secured within the spherical opening (38) on the tie rod end.

2. The steering axle (10) of claim 1, wherein the spherical ball (18) is coupled to the tie rod end and the oppositely attached first and second stud ends (22) of the spherical ball (18) are coupled to the steering knuckle (12).

3. The steering axle (10) of claim 1 or 2, wherein the tie rod (36) supports the spherical ball (18) of the ball joint assembly (16) for pivotal and rotational movement with respect to the tie rod (36).

4. The steering axle (10) of one of the claims 1 to 3, wherein the tie rod (36) supports the spherical ball (18) of the ball joint assembly (16) for non-planar motions with respect to the tie rod (36).

5. The steering axle (10) of one of the claims 1 to 4, further comprising a pair of ball dust boots (46) seated over the spherical opening (38) on the top and bottom surfaces of the tie rod end and wherein the ball dust boots (46) seals and prevents damage to the spherical ball (18).

6. The steering axle (10) of one of the claims 1 to 5, wherein the ball stud cap (32) secures the first and second stud ends (22) in place and prevents the first and second stud ends (22) from rotating.

7. The steering axle (10) of one of the claims 1 to 6, wherein the tie rod (36) has a length that is adjustable by rotating the first and second stud ends (22) wherein the rotation of the first and second studs (22) can effectively lengthen and shorten the tie rod (36).

8. The steering axle (10) of one of the claims 1 to 7, wherein the tie rod (36) has a length that is adjusted without the use of threads.

9. The steering axle (10) of one of the claims 1 to 8, further comprising a means for rotating the first and second stud ends (22) located on a top end of the first stud.

10. The steering axle (10) of one of the claims 1 to 9, further comprising a means for rotating the first and second stud ends (22) located on a bottom end of the second stud.

11. The steering axle (10) of one of the claims 1 to 10, wherein the first stud has a top end with an indicator mark (48), and further wherein the indicator mark (48) serves as an indicator of the rotation angle.

12. The steering axle (10) of one of the claims 1 to 11, wherein the tie rod (36) has a length that may be adjusted by turning a screw cap (42) located on an end of the first stud, and further wherein the studs (22) which are offset in relation to the center of the spherical ball (18) are rotated and further wherein the tie rod length is adjusted by rotating the first and second stud ends (22) until the operator obtains the desired adjusted tie rod length.

13. The steering axle (10) of one of the claims 1 to 12, wherein the longitudinal rotational axis (26) of the first and second stud ends (22) rotate relative to the spherical ball (18) and rotation of the first and second stud ends (22) adjust the toe-in and toe-out on the unitary tie rod (36) without disassembling the tie rod (36).
